# EUROPEAN PATENT APPLICATION

(11) **EP 4 598 271 A1**
(43) Date of publication of application: **06.08.2025**
(21) Application number: 23923624.3
(22) Date of filing: 12.07.2023
(51) Int. Cl.: H05B 6/68

(54) **DRIVING CIRCUIT FOR MAGNETRON, AND HEATING DEVICE**

(30) Priority: 22.02.2023 CN 202310146977
(71) Applicant: Guangdong Midea Kitchen Appliances Manufacturing Co., Ltd., Foshan, Guangdong 528311 (CN)
(72) Inventor: CHENG, Yan, Foshan, Guangdong 528311 (CN); LIU, Xinghua, Foshan, Guangdong 528311 (CN); LI, Qinghai, Foshan, Guangdong 528311 (CN); WANG, Fubao, Foshan, Guangdong 528311 (CN); GAO, Wei, Foshan, Guangdong 528311 (CN); XU, Xiaoping, Foshan, Guangdong 528311 (CN); CHEN, Fei, Foshan, Guangdong 528311 (CN)
(74) Representative: RGTH
(86) International application number: PCT/CN2023/106904
(87) International publication number: WO 2024/174456

(57) **Abstract**

The present application provides a driving circuit for a magnetron, and a heating device. The driving circuit for a magnetron comprises: a rectification circuit, a first output terminal of the rectification circuit being configured to be connected to an anode of a magnetron, a second output terminal of the rectification circuit being configured to be connected to a ground terminal of the magnetron, and the rectification circuit being configured to convert an alternating current into a direct current so as to supply power to the magnetron; a transformer, a primary coil of the transformer being configured to be connected to an alternating current power supply terminal or an inverter circuit, a first terminal of a first secondary coil of the transformer being configured to be connected to a cathode of the magnetron, a second terminal of the first secondary coil of the transformer being configured to be connected to the anode of the magnetron, a second secondary coil of the transformer being connected to the rectification circuit, and the transformer being configured to provide an alternating current for the rectification circuit, and a component having a variable resistance value, the component being located in a circuit path formed by the first secondary coil, the anode of the magnetron, and the cathode of the magnetron and configured to limit a current flowing through the magnetron, and the resistance value of the component is positively correlated with the temperature of the component.

## Description

### CROSS-REFERENCE TO RELATED APPLICATIONS

This application claims priority to Chinese Patent Application No. 202310146977.3 filed with China National Intellectual Property Administration on February 22, 2023 and entitled "DRIVING CIRCUIT FOR MAGNETRON, AND HEATING DEVICE", the entire contents of which are herein incorporated by reference.

### FIELD

The present application relates to the field of driving control, and particularly relates to a driving circuit for magnetron, and a heating device.

### BACKGROUND

In relevant technical solutions, when working, a magnetron can be equivalent to a diode placed in a constant magnetic field; the electrons in the cathode of the magnetron interact with an electric field in a vertical constant magnetic field, which converts electrical energy into electromagnetic energy to heat food. The cathode of the magnetron is often referred to as the heart of the magnetron, and its temperature during operation determines the working stability and lifespan of the magnetron.

After the magnetron starts oscillating, a filament voltage remains at around 3.3V or reduces with the decreasing of an output power; if the filament is continuously energized, it will cause an excessive temperature rise, and the overheating of the filament will intensify material evaporation, and this results in a decrease in the quality and a shortened service life of the filament.

### SUMMARY

The present application aims to solve at least one of the problems in the prior art or in the related art.

Thus, the first aspect of the present application is to provide a driving circuit for magnetron.

Thus, the second aspect of the present application is to provide a heating device.

In view of this, the first aspect of the present application provides a driving circuit for magnetron, comprising: a rectification circuit, and the first output terminal of the rectification circuit is configured to be connected to the anode of a magnetron, the second output terminal of the rectification circuit is configured to be connected to a ground terminal of the magnetron, and the rectification circuit is configured to convert an alternating current into a direct current to supply power to the magnetron; a transformer, and a primary coil of the transformer is configured to be connected to an alternating current power supply terminal or an inverter circuit, a first terminal of the first secondary coil of the transformer is configured to be connected to a cathode of the magnetron, a second terminal of the first secondary coil of the transformer is configured to be connected to an anode of the magnetron, a second secondary coil of the transformer is connected to the rectification circuit, and is configured to provide the AC for the rectification circuit; and a component having a variable resistance value, and the component is located in a circuit path between the first secondary coil, the anode of the magnetron, and the cathode of the magnetron, and configured to limit the current flowing through the magnetron, and the resistance value of the component is positively correlated with the temperature of the component.

The embodiment of the present application provides a driving circuit for magnetron, and the driving circuit comprises the transformer configured to be connected to the magnetron, the rectification circuit and the component.

The component is connected in series between the filament of the magnetron and the first secondary coil; in the case that the magnetron is working, the component will generate heat due to its own obstruction to current, or have a temperature rise due to the influence by the environment temperature of the driving current of the magnetron, and this results in an increase in the resistance value of the component. When the resistance value of the component increases, the resistance between the filament and the first secondary coil connected in series to the magnetron will increase, and this finally decreases the current in the above circuit; in the case that the current in the circuit decreases, the heat generation of the filament between the anode and the cathode in the magnetron is reduced, and the evaporation rate of the filament is reduced, and the service life of the magnetron is improved.

In the above embodiment, although the current flowing through the filament is reduced, during the initial start-up of the magnetron, the current flowing through the filament is relatively high, this makes the temperature of the filament rise to a relatively high temperature; in the case of a relatively high temperature of the filament, the filament can utilize the characteristic of secondary back bombardment of electrons to continue emitting electrons at a high temperature, and this allows the magnetron to operate. That is, the above embodiment of the present application can improve the service life of the magnetron while ensuring the normal operation of the magnetron.

The rectification circuit is arranged to convert an alternating current into a direct current, and to apply a stable high voltage to the anode of the magnetron, and the magnetron can generate an electric field; the first terminal and the second terminal of the first secondary coil are respectively connected to the anode and the cathode of the magnetron to provide a voltage of approximately 3.3 volts to the filament located between the anode and the cathode of the magnetron, and the filament can continuously emit electrons after being heated by electricity, and the electrons can interact with the electric field in a vertical constant magnetic field, and then electrical energy is converted into electromagnetic energy.

In the above embodiment, the resistance value of the component is positively correlated with the temperature of the component, and it can be understood that as the temperature of the component increases, the resistance value of the component further increases.

In addition, the driving circuit for magnetron provided by the present application further comprises the following additional features.

In some other embodiments, the component comprises a thermal relay and/or at least one thermistor.

In the embodiment, the specific form of the component is defined. The component can be a thermal relay, and the thermal relay is a protective electrical device for overload protection of an electric motor or other electrical equipment or electrical circuits; the current flowing into a thermal element generates heat, and this causes deformation of bimetallic sheets with different expansion coefficients; when the deformation reaches a certain distance, a connecting rod is pushed to move, and a control circuit is disconnected, and a contactor loses power and a main circuit is disconnected. In the embodiment of the present application, in the case that the current flowing into the thermal relay is relatively large, the thermal relay will be disconnected, and disconnection is enabled between the filament and the first secondary coil connected in series to the magnetron, and at this moment, the filament in the magnetron continues to emit electrons by using the characteristic of the secondary back bombardment of the electrons; in the case that the temperature of the thermal element in the thermal relay is reduced, the deformation of the bimetallic sheets with different expansion coefficients is reduced, the connecting rod is pushed to move and the control circuit is communicated, that is, conduction is enabled between the filament and the first secondary coil connected in series to the magnetron.

In the case that the component is at least one thermistor, the current flowing through the filament of the magnetron is reduced by using the characteristic that the resistance value of the thermistor increases as the temperature of the thermistor rises, and the heat generation of the filament between the anode and the cathode in the magnetron is reduced, and the evaporation rate of the filament is reduced, and the service life of the magnetron is improved.

In some embodiments, the number of the thermistors can be selected based on actual use scenarios and will not be repeated herein.

In some embodiments, the thermal relay and at least one thermistor are simultaneously arranged to use the thermal relay to cut off the circuit where the filament is located while the thermistor is configured to limit the current flowing through the filament of the magnetron, and this prevents the magnetron from working in a high-temperature environment and then improves the service life of the magnetron.

In some embodiments, in the case that the component comprises the thermal relay and at least one thermistor, the thermal relay is connected in series with at least one thermistor.

In the embodiment, in the case that the component comprises the thermal relay and at least one thermistor mentioned above, the connection relationship between the thermal relay and the at least one thermistor is defined.

By limiting the series connection between the thermal relay and at least one thermistor, the thermal relay is configured to cut off the circuit where the filament is located while the thermistor is configured to limit the current flowing through the filament of the magnetron, and this prevents the magnetron from working in a high-temperature environment and improves the service life of the magnetron.

In some embodiments, the thermal relay and at least one thermistor are located at different positions in the circuit between the first secondary coil and the magnetron.

In some embodiments, the component is located between the first terminal of the first secondary coil and the cathode of the magnetron and/or between the second terminal of the first secondary coil and the anode of the magnetron.

In the embodiment, the arrangement position of the component is defined, and it can be arranged based on actual use needs, for example, a position close to the cathode of the magnetron or the anode of the magnetron.

In some embodiments, the component comprises a wiring terminal and/or a socket used in conjunction with the magnetron.

In the embodiment, by selecting the component to be the wiring terminal or the socket for use in conjunction with the magnetron, this helps arrange the component close to the magnetron, and furthermore, when the magnetron is working and its temperature rises, the temperature of the component can further be affected by the temperature variation of the magnetron, and this achieves limiting the current flowing through the filament of the magnetron when the temperature of the magnetron is relatively high.

In the above embodiment, in the case that the temperature of the magnetron is relatively high, it can limit the current flowing through the filament of the magnetron, and reducing the possibility of the damage to the magnetron due to the high temperature, and the service life of the magnetron is improved.

In some embodiments, the component is at least a portion of the first secondary coil.

In the embodiment, considering that when the magnetron is working, the transformer is further working and generates heat, and the temperature of the transformer will gradually rise with the increase of working hours, based on this, the temperature of the transformer can further be configured to characterize the temperature of the magnetron; by integrating the component with the first secondary coil, for example, the component is used as a portion or all of the first secondary coil, the temperature of the component will further rise synchronously in the case that the temperature of the transformer rises, and then, by increasing the resistance value, the current flowing through the filament of the magnetron is limited, and this reduces the possibility of the damage to the magnetron due to the high temperature and the service life of the magnetron is improved.

In some embodiments, the component is at least a portion of the first secondary coil, which can be understood as that at least a portion of the first secondary coil is made of a thermistor material.

In some embodiments, the component is a wire.

In the embodiment, another form of the component is provided, and the wire mentioned above can be understood as a conductive line configured to connect the first secondary coil, the anode of the magnetron, and the cathode of the magnetron.

The conductive line is made of a thermistor material.

In some embodiments, the component is located on a housing of the magnetron.

In the embodiment, by arranging the component on a housing of the magnetron, the temperature of the magnetron can be transmitted to the component, to make the temperatures of the magnetron and the component tend to be the same; as the temperature of the magnetron tends to be the same as the temperature of the filament of the magnetron, the temperature of the filament of the magnetron can be directly characterized by the temperature of the component, and then, its own resistance value is changed to limit the current flowing through the filament of the magnetron, and this reduces the possibility of the damage to the magnetron due to the high temperature, and the service life of the magnetron is improved.

In some embodiments, the rectification circuit comprises: a first capacitor, and a first terminal of the first capacitor is connected to the anode of the magnetron, and a second terminal of the first capacitor is connected to a first terminal of the second secondary coil; a first diode, and a anode of the first diode is connected to the first terminal of the first capacitor, and a cathode of the first diode is connected to a second terminal of the second secondary coil; a second capacitor, and a first terminal of the second capacitor is connected to the second terminal of the first capacitor, and the second terminal of the second capacitor is connected to the ground terminal of the magnetron; and a second diode, and an anode of the second diode is connected to a cathode of the first diode, and the cathode of the second diode is connected to the second terminal of the second capacitor.

In the embodiment, the specific topology structure of the rectification circuit is defined, and under the topology structure, the rectification circuit comprises a voltage multiplier circuit, and when the voltage multiplier circuit achieves voltage rise, it further achieves the function of converting an alternating current into a direct current to supply power to the magnetron.

The voltage multiplier circuit is a circuit formed by the first capacitor, the first diode, the second capacitor, the second diode mentioned above and their connections.

In some embodiments, in the case that the primary coil of the transformer is connected to the inverter circuit, the inverter circuit comprises: a third capacitor, and the first terminal of the third capacitor is connected to a first DC (direct current) bus and the first terminal of the primary coil, and the first terminal of the third capacitor is connected to a second DC bus and the second terminal of the primary coil; and a switch tube, located on either the first DC bus or the second DC bus.

In the embodiment, by defining that the inverter circuit comprises the third capacitor and the switch tube, this allows the switch tube to convert the direct current power on the first DC bus and the second DC bus into an alternating current power during the conduction and cutoff phases of the switch tube, and the primary coil of the transformer is used for voltage conversion to obtain the voltage for supplying power to the magnetron.

In the above embodiment, the arrangement of the inverter circuit enables the driving circuit for magnetron to be adapted to a DC power supply scenario, and then different needs in different scenarios are met.

In some embodiments, the switch tube is a power tube.

In some embodiments, it further comprises: a rectification bridge, and a first input terminal of the rectification bridge is configured to be connected to a first AC (alternating current) power supply terminal, a second input terminal of the rectification bridge is configured to be connected to a second AC power supply terminal, the first output terminal of the rectification bridge is connected to the first DC bus, and the second output terminal of the rectification bridge is connected to the second DC bus.

In the embodiment, by arranging the rectification bridge, the rectification bridge can be configured to convert an alternating current into a direct current, and then the driving circuit of the magnetron can be adapted to different AC power supply scenarios, to reduce the power supply demand of the driving circuit of the magnetron.

In some embodiments, the first DC bus and the second DC bus can be understood as the positive electrode and the negative electrode of a power supply.

In some embodiments, the number of turns of the second secondary coil is greater than or equal to the number of turns of the primary coil.

In the embodiment, by limiting the number of turns of the second secondary coil to be at least more than the number of turns of the primary coil, the voltage of the alternating current output from the first terminal and the second terminal of the second secondary coil is higher than the voltage of the alternating current input from the primary coil. During this process, the alternating current output from the transformer can be increased to provide a relatively high voltage to the rectification circuit, and then the rectification circuit can provide a high voltage to the anode of the magnetron without the need for a voltage multiplier circuit.

In some embodiments, in the case that the rectification circuit does not comprise the voltage multiplier circuit, the rectification circuit comprises one rectification bridge to convert the alternating current into the direct current.

The second aspect of the present application provides a heating device, comprising: a magnetron; and a driving circuit for magnetron as described above.

In some embodiments, the heating device comprises a cooking device.

In some embodiments, the cooking device comprises a microwave oven or a microwave-steaming-baking machine.

The additional aspects and advantages of the present application will be given partially in the following description, and will be partially obvious in the following description, or can be understood through the implementation of the present application.

### BRIEF DESCRIPTION OF THE DRAWINGS

The above and/or additional aspects and advantages of the present application will be obvious and understood easily from the following description of the embodiments in combination with the accompanying drawings.
FIG. 1 is a first schematic view of the topology of a driving circuit for magnetron provided in an embodiment of the present application;
FIG. 2 is a second schematic view of the topology of a driving circuit for magnetron provided in an embodiment of the present application;
FIG. 3 is a schematic view of a control flow provided in an embodiment of the present application; and
FIG. 4 illustrates the corresponding relationship between the resistance value and the temperature value of a component provided in an embodiment of the present application.

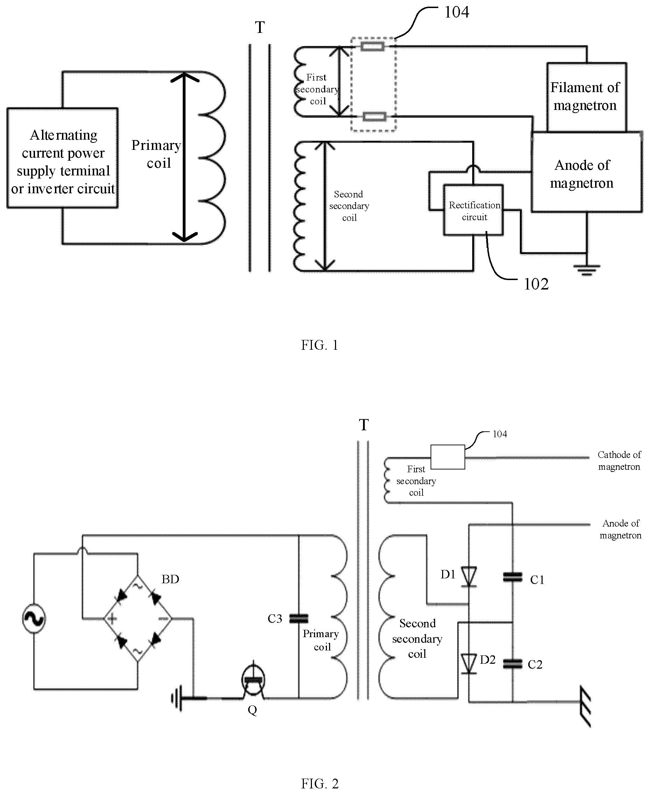

The corresponding relationships between the reference signs and the component names in FIG. 1 to FIG. 2 are as follows:
102 rectification circuit, T transformer, 104 component, C1 first capacitor, C2 second capacitor, C3 third capacitor, D1 first diode, D2 second diode, Q switch tube, BD rectification bridge.

### DETAILED DESCRIPTION OF THE APPLICATION

To more clearly understand the above aspects, features and advantages of the present application, the present application is further detailed hereinafter in combination with the accompanying drawings and embodiments. It should be indicated that in the case of no conflict, the embodiments and the features in the embodiments of the present application can be combined with each other.

Many details are illustrated in the following description for the convenience of a thorough understanding to the present application, but the present application can further be implemented using other embodiments other than these described herein. Therefore, the protection scope of the present application is not limited to the specific embodiments disclosed in the following text.

In one of the embodiments, as shown in FIG. 1 and FIG. 2, a driving circuit for magnetron is provided, comprising: a rectification circuit 102, and the first output terminal of the rectification circuit 102 is configured to be connected to the anode of a magnetron, the second output terminal of the rectification circuit 102 is configured to be connected to a ground terminal of the magnetron, and the rectification circuit 102 is configured to convert an alternating current into a direct current to supply power to the magnetron; a transformer T, and the primary coil of the transformer T is configured to be connected to an alternating current power supply terminal or an inverter circuit, the first terminal of the first secondary coil of the transformer T is configured to be connected to the cathode of the magnetron, the second terminal of the first secondary coil of the transformer T is configured to be connected to the anode of the magnetron, the second secondary coil of the transformer T is connected to the rectification circuit 102, and the transformer T is configured to provide an alternating current for the rectification circuit 102; and a component 104 having a variable resistance value, and the component 104 is located in a circuit path formed by the first secondary coil, the anode of the magnetron, and the cathode of the magnetron, and configured to limit a current flowing through the magnetron, and the resistance value of the component 104 is positively correlated with the temperature of the component 104.

The embodiment of the present application provides a driving circuit for magnetron, and the driving circuit comprises the transformer T configured to be connected to the magnetron, the rectification circuit 102 and the component 104.

The component 104 is connected in series between the filament of the magnetron and the first secondary coil; in the case that the magnetron is working, the component 104 will generate heat due to its own obstruction to current, or have a temperature rise due to the influence by the environment temperature of the driving current of the magnetron, and this results in an increase in the resistance value of the component 104. When the resistance value of the component 104 increases, the resistance between the filament and the first secondary coil connected in series to the magnetron will increase, and this finally decreases the current in the above circuit; in the case that the current in the circuit decreases, the heat generation of the filament between the anode and the cathode in the magnetron is reduced, and the evaporation rate of the filament is reduced, and the service life of the magnetron is improved.

In the above embodiment, although the current flowing through the filament is reduced, during the initial start-up of the magnetron, the current flowing through the filament is relatively high, this makes the temperature of the filament rise to a relatively high temperature; in the case of a relatively high temperature of the filament, the filament can utilize the characteristic of secondary back bombardment of electrons to continue emitting electrons at a high temperature, and this allows the magnetron to operate. That is, the above embodiment of the present application can improve the service life of the magnetron while ensuring the normal operation of the magnetron.

The rectification circuit 102 is arranged to convert an alternating current into a direct current, and to apply a stable high voltage to the anode of the magnetron, and the magnetron can generate an electric field; the first terminal and the second terminal of the first secondary coil are respectively connected to the anode and the cathode of the magnetron to provide a voltage of approximately 3.3 volts to the filament located between the anode and the cathode of the magnetron, and the filament can continuously emit electrons after being heated by electricity, and the electrons can interact with the electric field in a vertical constant magnetic field, and then electrical energy is converted into electromagnetic energy.

In some embodiments, the resistance value of the component 104 is positively correlated with the temperature of the component 104, and it can be understood that as the temperature of the component 104 increases, the resistance value of the component 104 further increases.

In the above embodiment, the component 104 comprises a thermal relay and/or at least one thermistor.

In the embodiment, the specific form of the component 104 is defined. The component 104 can be a thermal relay, and the thermal relay is a protective electrical device for overload protection of an electric motor or other electrical equipment or electrical circuits; the current flowing into a thermal element generates heat, and this causes deformation of bimetallic sheets with different expansion coefficients; when the deformation reaches a certain distance, a connecting rod is pushed to move, and a control circuit is disconnected, and a contactor loses power and a main circuit is disconnected.

In the embodiment of the present application, in the case that the current flowing into the thermal relay is relatively large, the thermal relay will be disconnected, and disconnection is enabled between the filament and the first secondary coil connected in series to the magnetron, and at this moment, the filament in the magnetron continues to emit electrons by using the characteristic of the secondary back bombardment of the electrons; in the case that the temperature of the thermal element in the thermal relay is reduced, the deformation of the bimetallic sheets with different expansion coefficients is reduced, the connecting rod is pushed to move and the control circuit is communicated, that is, conduction is enabled between the filament and the first secondary coil connected in series to the magnetron.

In the case that the component 104 is at least one thermistor, the current flowing through the filament of the magnetron is reduced by using the characteristic that the resistance value of the thermistor increases as the temperature of the thermistor rises, and the heat generation of the filament between the anode and the cathode in the magnetron is reduced, and the evaporation rate of the filament is reduced, and the service life of the magnetron is improved.

In some embodiments, the number of the thermistors can be selected based on actual use scenarios, and will not be repeated herein.

In some embodiments, the thermal relay and at least one thermistor are simultaneously arranged to use the thermal relay to cut off the circuit where the filament is located while the thermistor is configured to limit the current flowing through the filament of the magnetron, and this prevents the magnetron from working in a high-temperature environment and then improves the service life of the magnetron.

In some embodiments, in the case that the component 104 comprises the thermal relay and at least one thermistor, the thermal relay is connected in series with at least one thermistor.

In the embodiment, in the case that the component 104 comprises the thermal relay and at least one thermistor mentioned above, the connection relationship between the thermal relay and the at least one thermistor is defined.

By limiting the series connection between the thermal relay and at least one thermistor, the thermal relay is configured to cut off the circuit where the filament is located while the thermistor is configured to limit the current flowing through the filament of the magnetron, and this prevents the magnetron from working in a high-temperature environment and improves the service life of the magnetron.

In some embodiments, the thermal relay and at least one thermistor are located at different positions in the circuit between the first secondary coil and the magnetron.

In some embodiments, the component 104 is located between the first terminal of the first secondary coil and the cathode of the magnetron and/or between the second terminal of the first secondary coil and the anode of the magnetron.

In the embodiment, the arrangement position of the component 104 is defined, and it can be arranged based on actual use needs, for example, a position close to the cathode of the magnetron or the anode of the magnetron.

In some embodiments, the component 104 comprises a wiring terminal and/or a socket used in conjunction with the magnetron.

In the embodiment, by selecting the component 104 to be the wiring terminal or the socket for use in conjunction with the magnetron, this helps arrange the component 104 close to the magnetron, and furthermore, when the magnetron is working and then its temperature rises, the temperature of the component 104 can further be affected by the temperature variation of the magnetron, and this achieves limiting the current flowing through the filament of the magnetron when the temperature of the magnetron is relatively high.

In the above embodiment, in the case that the temperature of the magnetron is relatively high, it can achieve limiting the current flowing through the filament of the magnetron, and reducing the possibility of the damage to the magnetron due to the high temperature, and the service life of the magnetron is improved.

In some embodiments, the component 104 is at least a portion of the first secondary coil.

In the embodiment, considering that when the magnetron is working, the transformer T is further working and generates heat, and the temperature of the transformer T will gradually rise with the increase of working hours, based on this, the temperature of the transformer T can further be configured to characterize the temperature of the magnetron; by integrating the component 104 with the first secondary coil, for example, the component 104 is used as a portion or all of the first secondary coil, the temperature of the component 104 will further rise synchronously in the case that the temperature of the transformer T rises, and then, by increasing the resistance value, the current flowing through the filament of the magnetron is limited, and this reduces the possibility of the damage to the magnetron due to the high temperature and the service life of the magnetron is improved.

In some embodiments, the component 104 is at least a portion of the first secondary coil, which can be understood as that at least a portion of the first secondary coil is made of a thermistor material.

In some embodiments, the component 104 is a wire.

In the embodiment, another form of the component 104 is provided, and the wire mentioned above can be understood as a conductive line configured to connect the first secondary coil, the anode of the magnetron, and the cathode of the magnetron.

The conductive line is made of a thermistor material.

In some embodiments, the component 104 is located on a housing of the magnetron.

In the embodiment, by arranging the component 104 on a housing of the magnetron, the temperature of the magnetron can be transmitted to the component 104, to make the temperatures of the magnetron and the component 104 tend to be the same; as the temperature of the magnetron tends to be the same as the temperature of the filament of the magnetron, the temperature of the filament of the magnetron can be directly characterized by the temperature of the component 104, and then, its own resistance value is changed to limit the current flowing through the filament of the magnetron, and this reduces the possibility of the damage to the magnetron due to the high temperature, and the service life of the magnetron is improved.

In some embodiments, the rectification circuit 102 comprises: a first capacitor C1, and a first terminal of the first capacitor C1 is connected to the anode of the magnetron, and a second terminal of the first capacitor C1 is connected to a first terminal of the second secondary coil; a first diode D1, and an anode of the first diode D1 is connected to the first terminal of the first capacitor C1, and a cathode of the first diode D1 is connected to a second terminal of the second secondary coil; a second capacitor C2, and a first terminal of the second capacitor C2 is connected to the second terminal of the first capacitor C1, and the second terminal of the second capacitor C2 is connected to the ground terminal of the magnetron; and a second diode D2, and an anode of the second diode D2 is connected to a cathode of the first diode D1, and the cathode of the second diode D2 is connected to the second terminal of the second capacitor C2.

In the embodiment, the specific topology structure of the rectification circuit 102 is defined, and under the topology structure, the rectification circuit 102 comprises a voltage multiplier circuit, and when the voltage multiplier circuit achieves voltage rise, it further achieves the function of converting an alternating current into a direct current to supply power to the magnetron.

The voltage multiplier circuit is a circuit formed by the first capacitor C1, the first diode D1, the second capacitor C2, the second diode D2 mentioned above and their connections.

In some embodiments, in the case that the primary coil of the transformer T is connected to the inverter circuit, the inverter circuit comprises: a third capacitor C3, and the first terminal of the third capacitor C3 is connected to a first DC bus and the first terminal of the primary coil, and the second terminal of the third capacitor C3 is connected to a second DC bus and the second terminal of the primary coil; and a switch tube Q, located on either the first DC bus or the second DC bus.

In the embodiment, by defining that the inverter circuit comprises the third capacitor C3 and the switch tube Q, this allows the switch tube Q to convert the direct current power on the first DC bus and the second DC bus into an alternating current power during the conduction and cutoff phases of the switch tube Q, and the primary coil of the transformer T is used for voltage conversion to obtain the voltage for supplying power to the magnetron.

In the above embodiment, the arrangement of the inverter circuit enables the driving circuit for magnetron to be adapted to a DC power supply scenario, and then different needs in different scenarios are met.

In some embodiments, the switch tube Q is a power tube.

In some embodiments, it further comprises: a rectification bridge BD, and the first input terminal of the rectification bridge BD is configured to be connected to a first AC power supply terminal, the second input terminal of the rectification bridge BD is configured to be connected to a second AC power supply terminal, the first output terminal of the rectification bridge BD is connected to the first DC bus, and the second output terminal of the rectification bridge BD is connected to the second DC bus.

In the embodiment, by arranging the rectification bridge BD, this allows converting an alternating current into a direct current by using the rectification bridge BD, and then the driving circuit of the magnetron can be adapted to different AC power supply scenarios, to reduce the power supply demand of the driving circuit of the magnetron.

In some embodiments, the first DC bus and the second DC bus can be understood as the positive electrode and the negative electrode of a power supply.

In some embodiments, the number of turns of the second secondary coil is greater than or equal to the number of turns of the primary coil.

In the embodiment, by limiting the number of turns of the second secondary coil to be at least more than the number of turns of the primary coil, the voltage of the alternating current output from the first terminal and the second terminal of the second secondary coil is higher than the voltage of the alternating current input from the primary coil. During this process, the alternating current output from the transformer T can be increased to provide a relatively high voltage to the rectification circuit 102, and then the rectification circuit 102 can provide a high voltage to the anode of the magnetron without the need for a voltage multiplier circuit.

In some embodiments, in the case that the rectification circuit 102 does not comprise the voltage multiplier circuit, the rectification circuit 102 comprises one rectification bridge to convert the alternating current into the direct current.

In one of the embodiments, a heating device is provided, comprising: a magnetron; and a driving circuit for magnetron as described above.

In the embodiment, the heating device comprises the driving circuit for magnetron, and the driving circuit comprises the transformer T configured to be connected to the magnetron, the rectification circuit 102 and the component 104.

The component 104 is connected in series between the filament of the magnetron and the first secondary coil; in the case that the magnetron is working, the component 104 will generate heat due to its own obstruction to current, or have a temperature rise due to the influence by the environment temperature of the driving current of the magnetron, and this results in an increase in the resistance value of the component 104. When the resistance value of the component 104 increases, the resistance between the filament and the first secondary coil connected in series to the magnetron will increase, and this finally decreases the current in the above circuit; in the case that the current in the circuit decreases, the heat generation of the filament between the anode and the cathode in the magnetron is reduced, and the evaporation rate of the filament is reduced, and the service life of the magnetron is improved.

In some embodiments, the heating device can be a constant temperature box, a heating furnace, etc.

In some embodiments, the heating device comprises a plurality of magnetrons, and the anodes between the plurality of magnetrons are connected and the cathodes of the plurality of magnetrons are connected.

In some embodiments, the heating device comprises a cooking device.

In some embodiments, the cooking device comprises a microwave oven or a microwave-steaming-baking machine.

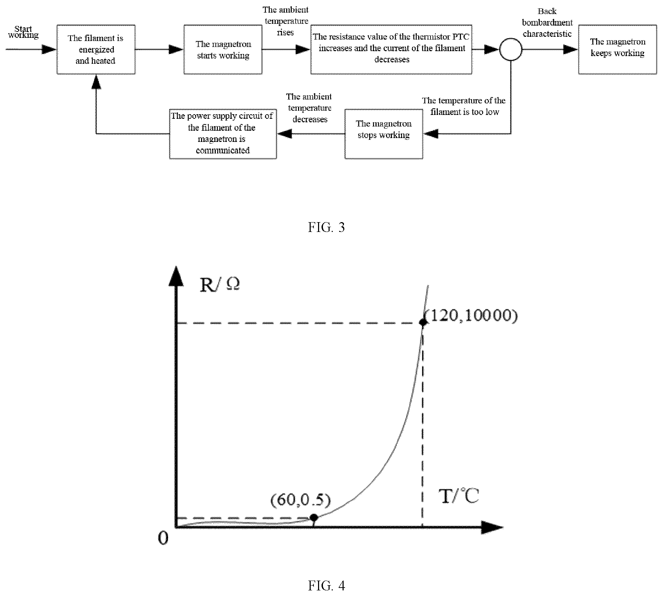

In the embodiment of the present application, as shown in FIG. 3, a plurality of thermistors are connected in series between the secondary circuit of the transformer supplying power to the filament of the magnetron, to achieve feedback and regulation of the current of the circuit of the filament. At the beginning of power on, the microwave oven will have a preheating stage to ensure that the temperature of the filament of the magnetron rises to a certain value and electrons can be emitted for operation; during this stage, there is a voltage at both ends of the filament of the magnetron and the anode of the magnetron, but there is not current flowing through the circuit of the anode of the magnetron. Until the preheating is completed, the magnetron starts to work, and the ambient temperature begins to rise rapidly, the resistance of the thermistor increases, and at this moment, the current in the power supply circuit of the filament rapidly decreases. By using the back bombardment characteristic of the magnetron, the filament is enabled to continue generating electrons, and this keeps the magnetron operating normally.

In addition, a self-feedback adjustment of the temperature of the filament can further be achieved; when the operation is manually stopped or the temperature of the filament is too low to emit electrons, the magnetron will stop working at this moment, and the ambient temperature will rapidly decrease, and the thermistor value decreases rapidly. At this moment, when restarted, the current of the filament will increase rapidly to energize and heat the filament of the magnetron; when heated to a certain temperature, the filament can emit electrons and the magnetron can continue to work, the ambient temperature quickly rises, and the resistance of the thermistor further increases; the current of the circuit of the filament will decrease to be close to 0 ampere, and the power supply circuit of the filament of the cathode is equivalent to disconnecting and stopping the power supply and heating of the filament, and the self-feedback adjustment for the filament heating can be formed.

As shown in FIG. 4, from the variation curve of the thermistor, it can be seen that the resistance value is close to 0 at room temperature (35°C), and the resistance approaches infinity when the temperature rises, the current of the power supply circuit of the filament is extremely small and is equivalent to being disconnected, and this can prevent too high temperature rise of the filament of the magnetron when it is continuously powered, prevent the volatilization of the filament material from affecting the service life of the magnetron, and meanwhile can further improve the efficiency of the magnetron.

In the specification and the claims of the present application, the features of "first" and "second" can indicate or imply comprising one or a plurality of said features. In the text of the present application, the term of "a plurality of" indicates two or more than two, unless otherwise explicitly specified or defined. In addition, in the specification and claims, the term "and/or" represents at least one of connected objects, and the character "/" generally indicates an "or" relationship between the related objects before and after the character.

In the description of the present application, it can be understood that the orientation or position relations indicated by the terms of "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential" and the like are based on the orientation or position relations shown in the accompanying drawings, and they are just intended to conveniently describe the embodiments of the present application and simplify the embodiments of the application, and are not intended to indicate or imply that the devices or units as indicated should have specific orientations or should be configured or operated in specific orientations, and then should not be construed as limitations to the present application.

In the textual description of the present application, it can be understood that, unless otherwise specified and limited, the terms "mount", "connected with", and "connected to" should be understood in a broad sense. For example, they can be fixed connections, detachable connections, or integral connections; they can be a mechanical structure connection or an electrical connection; they can be a direct connection between two, or an indirect connection of two through an intermediate medium, or a communication inside two elements. For those of ordinary skills in this field, the specific meanings of the above terms in the present application can be understood in specific situations.

In the claims, specification and accompanying drawings of the present application, the term of "a plurality of" refers to two or more than two, unless otherwise clearly defined. The orientation or position relations indicated by the terms of "upper", "lower" and the like are based on the orientation or position relations shown in the accompanying drawings, and are just intended to conveniently describe the present application and simplify the description, and are not intended to indicate or imply that the devices or units as indicated should have specific orientations or should be configured or operated in specific orientations, and then such description should not be construed as limitations to the present application. The terms "connect", "mount", "fix" and the like should be understood in a broad sense, for example, the term "connect" can be a fixed connection between a plurality of objects, a detachable connection between a plurality of objects, or an integral connection; it can be a direct connection between a plurality of objects, or an indirect connection between a plurality of objects through an intermediate medium. For those of ordinary skills in this field, the specific meanings of the above terms in the present application can be understood based on the specific situations of the above data.

In the claims, the description and the accompanying drawings of the specification of the present application, the description of the terms of "an embodiment", "some embodiments", "specific embodiment" and the like is intended to mean that the specific features, structures, materials or characteristics described in combination with the embodiments or examples are comprised in at least one embodiment or example of the present application. In the claims, the description and the accompanying drawings of the specification, the illustrative expression of the above terms may not indicate the same embodiment or example. In addition, the specific features, structures, materials or characteristics as described may be combined with each other in an appropriate method in one or more of any embodiments or examples.

The above-mentioned are merely some embodiments of the present application and not intended to limit the present application, and for one skilled in the art, various modifications and changes may be made to the present application. Any modifications, equivalent substitutions, improvements and so on made within the spirit and principle of the present application should be covered within the scope of protection of the present application.

## Claims

1. A driving circuit for a magnetron, comprising:
a rectification circuit, wherein a first output terminal of the rectification circuit is configured to be connected to an anode of the magnetron, a second output terminal of the rectification circuit is configured to be connected to a ground terminal of the magnetron, and the rectification circuit is configured to convert AC (alternating current) into DC (direct current) to supply power to the magnetron;
a transformer, wherein a primary coil of the transformer is configured to be connected to an alternating current power supply terminal or an inverter circuit, a first terminal of a first secondary coil of the transformer is configured to be connected to a cathode of the magnetron, a second terminal of the first secondary coil of the transformer is configured to be connected to the anode of the magnetron, a second secondary coil of the transformer is connected to the rectification circuit, and is configured to provide the AC for the rectification circuit; and
a component having a variable resistance value, wherein the component is located in a circuit path comprising the first secondary coil, the anode of the magnetron, and the cathode of the magnetron, and configured to limit current flowing through the magnetron,
wherein the resistance value of the component is positively correlated with temperature of the component.

2. The driving circuit for the magnetron according to claim 1, wherein, the component comprises a thermal relay and/or at least one thermistor.

3. The driving circuit for the magnetron according to claim 2, wherein, in a case that the component comprises the thermal relay and the at least one thermistor, the thermal relay is connected in series with the at least one thermistor.

4. The driving circuit for the magnetron according to claim 1, wherein, the component is located between the first terminal of the first secondary coil and the cathode of the magnetron and/or between the second terminal of the first secondary coil and the anode of the magnetron.

5. The driving circuit for the magnetron according to claim 1, wherein, the component comprises a wiring terminal and/or a socket used in conjunction with the magnetron.

6. The driving circuit for the magnetron according to claim 1, wherein, the component is at least a portion of the first secondary coil.

7. The driving circuit for the magnetron according to claim 1, wherein, the component is a wire.

8. The driving circuit for the magnetron according to any one of claims 2 to 4, wherein, the component is located on a housing of the magnetron.

9. The driving circuit for the magnetron according to any one of claims 1 to 7, wherein, the rectification circuit comprises:
a first capacitor, wherein a first terminal of the first capacitor is connected to the anode of the magnetron, and a second terminal of the first capacitor is connected to a first terminal of the second secondary coil;
a first diode, wherein an anode of the first diode is connected to the first terminal of the first capacitor, and a cathode of the first diode is connected to a second terminal of the second secondary coil;
a second capacitor, wherein a first terminal of the second capacitor is connected to the second terminal of the first capacitor, and a second terminal of the second capacitor is connected to the ground terminal of the magnetron; and
a second diode, wherein an anode of the second diode is connected to the cathode of the first diode, and a cathode of the second diode is connected to the second terminal of the second capacitor.

10. The driving circuit for the magnetron according to any one of claims 1 to 7, wherein, in the case that the primary coil of the transformer is connected to the inverter circuit, the inverter circuit comprises:
a third capacitor, wherein a first terminal of the third capacitor is connected to a first direct current bus and a first terminal of the primary coil, and a first terminal of the third capacitor is connected to a second direct current bus and a second terminal of the primary coil; and
a switch tube, located on either the first direct current bus or the second direct current bus.

11. The driving circuit for the magnetron according to claim 10, further comprising:
a rectification bridge, wherein a first input terminal of the rectification bridge is configured to be connected to a first alternating current power supply terminal, a second input terminal of the rectification bridge is configured to be connected to a second alternating current power supply terminal, a first output terminal of the rectification bridge is connected to the first direct current bus, and a second output terminal of the rectification bridge is connected to the second direct current bus.

12. The driving circuit for the magnetron according to any one of claims 1 to 7, wherein, a number of turns of the second secondary coil is greater than or equal to a number of turns of the primary coil.

13. A heating device, comprising:
a magnetron; and
a driving circuit for the magnetron according to any one of claims 1 to 12.

14. The heating device according to claim 13, wherein, the heating device comprises a cooking device.

15. The heating device according to claim 14, wherein, the cooking device comprises a microwave oven or a microwave-steaming-baking machine.
